Europäisches Patentamt

European Patent Office

Office européen des brevets

(19)

(11) Numéro de publication : **0 070 073**
**B1**

(12) **FASCICULE DE BREVET EUROPÉEN**

(45) Date de publication du fascicule du brevet :
15.08.84

(51) Int. Cl.³ : **B 23 B 13/02**

(21) Numéro de dépôt : **82200858.7**

(22) Date de dépôt : **09.07.82**

(54) **Dispositif ravitailleur pour tour automatique et procédé de fabrication de celui-ci.**

(30) Priorité : **15.07.81 CH 4650/81**

(43) Date de publication de la demande :
**19.01.83 Bulletin 83/03**

(45) Mention de la délivrance du brevet :
**15.08.84 Bulletin 84/33**

(84) Etats contractants désignés :
**AT BE CH DE FR GB IT LI LU NL SE**

(56) Documents cités :
**EP-A- 0 026 042**
**CH-A-    585 601**
**FR-A- 2 298 254**
**GB-A-    476 601**
**GB-A-    551 952**
**GB-A- 2 000 702**
**US-A- 3 890 860**

(73) Titulaire : **Société de vente et de fabrication pour le décolletage LNS S.A.**
**CH-2534 Orvin (CH)**

(72) Inventeur : **Louis, Alexandre**
**Chemin Mol 37**
**CH-2525 Le Landeron (CH)**
Inventeur : **Léchot, André**
**L'Eau Belle**
**CH-2534 Orvin (CH)**

(74) Mandataire : **Dubois, Jean René et al**
**Bovard AG Patentanwäite VSP Optingenstrasse 16**
**CH-3000 Bern 25 (CH)**

## Description

La présente invention concerne un dispositif ravitailleur pour tour automatique présentant une pluralité d'espaces tubulaires guide-barres de différents diamètres. Elle concerne également un procédé de fabrication de celui-ci.

On connaît des dispositifs ravitailleurs de ce type et il y a lieu de citer en particulier le ravitailleur dénommé « superhydrobar » commercialisé par la maison LNS, Orvin, Suisse sous la désignation « HYS » (GB-A-2000702). Les fig. 1 et 2, qui seront considérées en détail plus loin, montrent comment se présente un tel dispositif ravitailleur :

Un certain nombre de tubes métalliques, typiquement dans le ravitailleur du type HYS de la maison LNS, cinq tubes métalliques de différents diamètres, sont logés dans un tube métallique extérieur ou manteau, une masse d'enrobage étant coulée à l'intérieur du tube extérieur et maintenant en place les différents tubes intérieurs qui constituent des tubes guide-barres ou tubes de guidage de barres.

Une performance qu'un tel dispositif ravitailleur se doit de réaliser, au moins d'une façon approximative, est que les axes des différents tubes intérieurs soient bien parrallèles à l'axe du dispositif, c'est-à-dire à l'axe du tube extérieur ou manteau, et que de plus les axes des tubes intérieurs soient tous disposés à égale distance de l'axe du tube extérieur, ou axe du dispositif. Avec la construction actuelle, ces deux performances sont approximativement atteintes par la mise en œuvre coûteuse d'un outillage spécialement conçu pour maintenir les différents tubes en place l'un par rapport à l'autre au moment où une masse d'enrobage encore à l'état liquide est coulée dans le tube. Ce travail est compliqué et coûteux, les positions relatives des tubes sont assurées aux extrémités et des mesures doivent également être prises pour éviter une flexion inadmissible des tubes, spécialement des tubes les plus petits, approximativement à la moitié de la longueur du dispositif, au moment du coulage puis du durcissage de la masse d'enrobage. On peut naturellement effectuer ce coulage en maintenant tous les tubes verticaux, pour éviter des effets de flexion par gravité, mais ceci pose des problèmes étant donné que les tubes sont en général d'une longueur d'approximativement 5 m. Par ailleurs, un coulage de masse d'enrobage effectué alors que les tubes sont en position oblique introduit justement des risques de flexion de la partie médiane des tubes.

Par ailleurs, la condition de concentricité, c'est-à-dire la condition selon laquelle les axes des différents tubes doivent tous être à une même distance de l'axe principal du dispositif, c'est-à-dire de l'axe du tube extérieur, n'est atteinte en fait que d'une façon approximative. En fonctionnement, il est nécessaire, avec les dispositifs ravitailleurs actuellement fabriqués et vendus, de placer de petites cales ou de petits cylindres de calage à l'endroit où le tube est tenu en place à proximité de l'arrière d'une poupée de tour, afin d'assurer que celui des tubes guide-barres qui est en fonction, c'est-à-dire celui que l'on amène en position basse par rotation du tube extérieur, soit exactement dans l'alignement de l'axe de la broche du tour automatique. Si l'on pouvait assurer que les axes de tous les tubes intérieurs se trouvent rigoureusement sur une même circonférence centrée sur l'axe principal du dispositif, c'est-à-dire sur l'axe du tube extérieur, on pourrait se passer de ce réglage supplémentaire à l'aide de petites cales, qui doivent chacune être établies en correspondance avec la position d'un tube intérieur bien déterminé dans un tube extérieur bien déterminé. En un mot, la satisfaction plus stricte de l'exigence de concentricité des axes des tubes intérieurs permettrait une simplification d'utilisation et une bonne standardisation.

Le but de la présente invention est de fournir un dispositif ravitailleur du type général en question qui résolve les problèmes précédemment mentionnés connus de l'art antérieur, c'est-à-dire qui permette une simplification et une diminution de coût de la fabrication et qui permette de mieux assurer les conditions géométriques, c'est-à-dire principalement la condition de concentricité, de la disposition des conduits guide-barres dans l'agencement cylindrique global. Ce but est donc en même temps de fournir un ravitailleur qui tout à la fois soit moins coûteux à fabriquer et soit plus précis dans ses dimensions, c'est-à-dire plus commode à utiliser.

Conformément à l'invention, ce but est atteint par la présence des caractères énoncés dans la revendication indépendante annexée, dont la teneur est la suivante :

« Dispositif ravitailleur pour tour automatique, présentant une pluralité d'espaces tubulaires guide-barres de différents diamètres, comprenant un corps allongé en forme de cylindre dont l'axe constitue l'axe principal du dispositif, ladite pluralité d'espaces tubulaires guide-barres de différents diamètres, étant ménagés dans ledit corps allongé en forme de cylindre, tous ces espaces tubulaires ayant leur axe parallèle audit axe principal, tous à une distance égale de celui-ci, caractérisé en ce qu'il est formé d'au moins un tronçon longitudinal de profilé central et d'au moins un tronçon d'un profilé marginal annulaire ou d'une pluralité de profilés marginaux en forme de coquille jointifs entre eux et rassemblés autour du tronçon de profilé central, la périphérie du profilé central étant munie de gorges longitudinales à profils en portions d'arc de cercle établissant des portions de parois cylindriques concaves, et la surface intérieure des profilés marginaux étant munie de gorges longitudinales avec une configuration qui établit des portions de parois cylindriques concaves correspondant respectivement à celles des gorges du profilé central et coopérant avec elles pour délimiter des espaces cylindriques longitudinaux.

Les revendications dépendantes définissent des formes d'exécution particulièrement avantageuses de l'objet de l'invention.

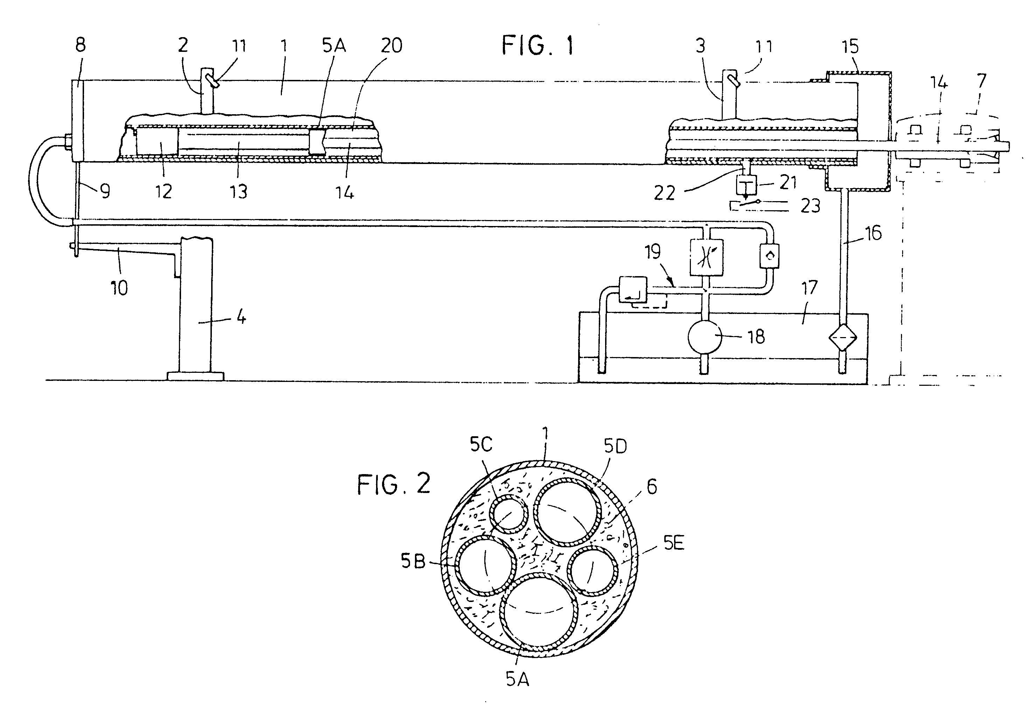

En fait, l'invention revient à inverser la constitution d'un dispositif du type en question, quelque peu similaire à un barillet. On a constitué des dispositifs à barillet, mais qui différaient du dispositif en question par le fait que tous les tubes du barillet avaient le même diamètre, ce qui simplifiait la construction et permettait sans grande difficulté une bonne précision, en prenant une série de tubes et en les joignant avec des arceaux, entretoises, disques, etc, de manière à former un genre de cage. Bien sûr, un tel montage avait été envisagé pour la production d'un dispositif du type en question, notamment pour l'hydrobar, mais on se heurtait à des inconvénients, à savoir : premièrement, une grande difficulté à assembler des tubes de différents diamètres à la manière d'un barillet, avec une précision de positionnement suffisante, étant donné les écarts angulaires différents selon le diamètre du tubes, et étant donné la difficulté du positionnement radial, également compte tenu des différences de diamètre des tubes, et deuxièmement, la grande perte de place impliquée par une construction en forme de barillet, perte de place qui devenait difficilement supportable dès lors que l'on avait des tubes de grand diamètre (voisinant avec des tubes de diamètre moins grand). La solution du barillet, c'est-à-dire de la construction d'une cage à l'aide de ses éléments, avait été abandonnée au profit d'une construction utilisant un remplissage par une masse d'enrobage (comme le montre la fig. 2, qui illustre l'art antérieur). Avec cette construction, c'était toutefois toujours encore les tubes qui étaient les éléments principaux de la structure, la masse d'enrobage n'ayant été prévue que pour stabiliser le positionnement des tubes et pour établir de façon relativement simple le positionnement mutuel de ceux-ci. Mais les tubes étaient la structure principale, la masse d'enrobage la structure d'appoint. En l'occurrence, l'invention inverse le processus, on crée tout d'abord un ensemble plein ou partiellement plein, construit d'une façon particulière qu'il fallait bien découvrir car rien de tel n'existait jusqu'alors, et on établit ainsi d'abord une structure pleine comprenant des vides qui sont justement les espaces tubulaires mentionnés dans la revendication. Ensuite, il est possible ou non d'introduire des tubes ou chemises dans les espaces tubulaires, pour établir adéquatement les espaces tubulaires servant au guidage de la barre, mais ces tubes, s'ils existent, sont mis en place après création de la structure, dans des vides adéquatement ménagés dans celle-ci, et ils ne sont pas utilisés pour créer la structure.

C'est notamment en cela, c'est-à-dire en cette inversion de la conception structurelle du dispositif, que l'objet de l'invention se distingue inventivement de tout ce qui était connu antérieurement concernant ce genre de dispositif.

Le dessin annexé illustre, à titre d'exemple et comparativement à ce que connaissait l'art antérieur, une forme d'exécution, à deux variantes, de l'objet de l'invention ; dans ce dessin :

la figure 1 est une vue générale en élévation montrant la façon dont est agencée un dispositif ravitailleur de type connu, du point de vue de la disposition générale et abstraction faite de questions de détail, cette figure 1 montre également comment peut se présenter un dispositif ravitailleur constituant une forme d'exécution de l'objet de l'invention,

la figure 2 est une vue en coupe transversale d'un dispositif ravitailleur connu de l'art antérieur,

la figure 3 est une vue en coupe transversale d'un dispositif ravitailleur constituant une forme d'exécution de l'objet de l'invention, dans le cas d'une première variante,

la figure 4 est une vue en coupe transversale du dispositif ravitailleur conforme à la conception proposée par l'invention, dans une seconde variante d'exécution, cette figure 4 illustrant de plus la présence d'un distributeur-collecteur d'huile d'extrémité,

la figure 5 est une vue en coupe raccourcie selon V-V (fig. 3) de la forme d'exécution en question du dispositif ravitailleur selon la conception proposée,

la figure 6 est une vue en coupe, selon VI-VI (fig. 5), représentant un détail d'un bouchon d'extrémité,

la figure 7 représente, d'une façon analogue à la figure 3, une configuration que l'on peut donner aux différents profilés, pour assurer une possibilité de montage transversal des tubes ou chemises, cette possibilité économisant grandement la place de travail nécessaire pour réaliser le montage.

Les fig. 1 et 2 représentent un dispositif ravitailleur connu, du type LNS HYS (Superhydrobar). Un tube extérieur ou manteau 1, qui est mobile et indexable en rotation, sous commande manuelle, est tenu dans un palier arrière 2 et un palier avant 3, le palier arrière s'appuyant sur un support fixe 4 tandis que le palier avant 3 s'appuie contre un support fixe ou un élément similaire non représenté. A l'intérieur du manteau ou tube extérieur 1 se trouve, comme le montre la fig. 2, une pluralité de tubes de guidage, ou tubes intérieurs 5A, 5B, 5C, 5D et 5E, ces tubes de guidage se trouvant enrobés dans un matériau de moulage, ou masse d'enrobage, 6. Les axes des tubes intérieurs 5A à 5E se trouvent tous à la même distance de l'axe principal du dispositif, c'est-à-dire de l'axe du tube extérieur ou manteau 1, de façon telle que, selon les besoins, l'un ou l'autre de ces tubes de guidage puisse être mis en alignement axial avec la broche de la poupée 7 d'un tour automatique. Le positionnement du dispositif ravitailleur sur les supports est tel que le tube intérieur, ou tube guide-barres, qui se trouve en position basse à l'intérieur du manteau 1 soit en alignement avec la broche de la poupée du tour. Naturellement une autre disposition pourrait être adoptée ceci dépendant des supports. Une barre de matériau à usiner 14 se trouve à l'intérieur du tube guide-barre 5A, en alignement avec la broche de la poupée du tour ; lorsqu'une barre a été entièrement consommée et qu'une nouvelle barre doit être introduite dans le tube, la partie avant du dispositif ravitailleur peut glisser latéralement sur les supports, d'une façon non représentée.

Les arceaux des paliers 2 et 3 sont adéquatement agencés de façon qu'une vis-levier 11 permette une fixation adéquate du tube extérieur ou manteau 1, sur les supports, à l'arrière du tour. A l'intérieur du tube guide-barres (à la fig. 1, le tube guide-barre 5A) la barre de matériau à usiner 14 est poussée par une poussette 13 à l'arrière de laquelle se trouve un piston 12. Chaque tube guide-barre 5A à 5D contient un piston de diamètre adéquat, actionnant une poussette. De l'huile sous pression est amenée à l'arrière du tube guide-barre, au travers d'une ouverture d'un couvercle arrière 8 qui ferme le dispositif. Un agencement d'amenée et de récupération d'huile 16 à 19 applique une pression d'huile dans le tube guide-barre à l'arrière du piston 12, de façon à pousser ce dernier vers l'avant pour faire avancer la barre de matériau lorsque le fonctionnement du tour automatique libère cette barre de la pince de la broche du tour (s'il s'agit d'un tour à poupée mobile, la pression d'huile empêche la barre de matériau de reculer lorsque la poupée mobile recule, sa pince étant desserrée). Il existe un jeu radial entre le piston et le tube de guidage, lequel jeu radial laisse passer une certaine quantité d'huile sous pression. De plus, un canal de passage d'huile peut être établi à l'intérieur du piston 12. Une certaine quantité d'huile passe donc du côté avant du piston, autour de la poussette, puis en 20, autour de la barre à usiner, et cette huile assure un fonctionnement doux, exempt d'usure et peu bruyant, du dispositif ravitailleur dans laquelle la barre de matériau à usiner tourne. Cette huile s'écoule naturellement vers l'avant et elle tombe dans un capuchon de captage d'huile 15, fixe, d'où elle retourne à un bac de réserve d'huile 17 par l'intermédiaire d'un conduit 16. L'agencement d'amenée et de récupération d'huile comprend, outre le capuchon de captage d'huile 15, le conduit de retour 16, et le bac 17, une pompe 18 et un agencement 19 de tuyauterie et d'organes de réglage qui assurent l'amenée de l'huile, en quantité voulue et à la pression voulue, à l'arrière du tube guide-barre 5A.

On note que le couvercle 8 est empêché de tourner par un bras 9 et une barre 10 fixée au support arrière 4.

Du côté avant du dispositif, un conduit 22 transmet la pression d'huile à un détecteur de pression 21 actionnant un contact 23. On comprend bien que la pression d'huile à l'avant du piston est plus faible que la pression d'huile à l'arrière du piston, et, lorsque le piston 12 franchit l'endroit où se trouve le canal de prise de pression 22, le détecteur de pression 21 constate une augmentation de pression, et actionne en conséquence l'interrupteur 23. La longueur de la poussette 13, de même que la position du conduit de prise de pression 22, compte tenu de la distance entre l'avant du dispositif et la pince de la broche du tour, sont établies de façon telle que le capteur 21 actionne le contact 23 au moment où la barre de matériau à usiner 14 est consommée au maximum, la poussette 13 se trouvant alors dans la poupée du tour. Une inversion de la pression d'huile, c'est-à-dire la présence d'une dépression d'huile, à l'arrière du piston 12 fait reculer le piston et la poussette jusqu'au fond du tube guide-barre, alors que le dernier déchet de matière reste provisoirement dans la pince du tour pour en être extrait à l'aide de moyens adéquats tandis que l'on recharge le tube guide-barre d'une nouvelle barre de matériau à usiner.

Le dispositif fonctionne correctement pour autant que le rapport entre le diamètre de la barre de matériau à usiner et le diamètre intérieur du tube guide-barre soit maintenu dans un certain domaine adéquat. Un tube d'approximativement 20 mm convient pour des barres de l'ordre de 12 à 17 mm par exemple, pour des barres plus petites, il convient d'utiliser un tube guide-barre plus petit. C'est la raison pour laquelle, comme le montre la fig. 2, le dispositif ravitailleur du type superhydrobar (connu) comprend une pluralité de tubes guide-barres qui peuvent, à choix selon le désir de l'utilisateur, être amenés en alignement avec la broche du tour.

La confection du cylindre comprenant le tube extérieur ou manteau 1 et les tubes intérieurs ou tubes guide-barres 5A-5E, avec interposition de la masse d'enrobage 6, pose un certain nombre de problèmes compte tenu notamment du fait que les différents tubes guide-barres sont de diamètres différents. Il importe qu'ils soient maintenus tous dans une position telle que la distance entre leur axe et l'axe du dispositif soit égale pour tous les tubes. Par ailleurs, la position angulaire des tubes intérieurs est importante car il faut que la position exacte en alignement avec la poupée puisse être déterminée avec précision par un indexage du tube extérieur. En pratique la fabrication du dispositif de la manière illustrée aux fig. 1 et 2 est coûteuse, compliquée et ne permet malgré tout qu'une précision relative du positionnement des tubes guide-barres à l'intérieur du tube extérieur. C'est la raison pour laquelle on a pratiquement, pour chaque tube guide-barre de chaque dispositif ravitailleur, deux cales numérotées qui, par rapport au dispositif support, permettent d'établir exactement le positionnement voulu du cylindre extérieur pour que le tube guide-barre se trouve exactement en alignement axial avec la broche de la poupée du tour.

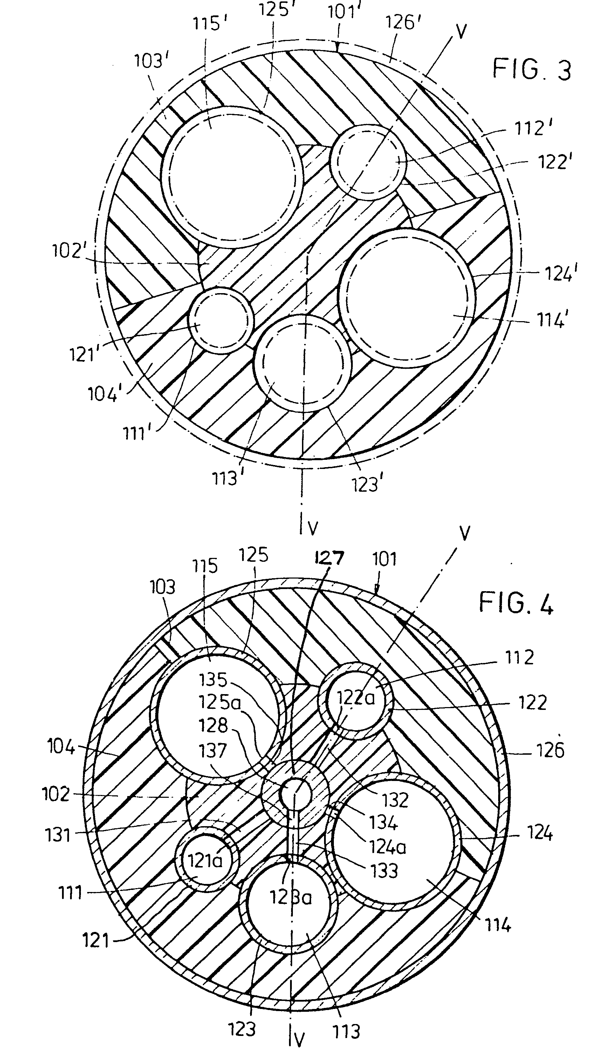

Ces difficultés de fabrication et ce relatif manque de précision des dispositifs actuellement fabriqués et vendus, ont amené à chercher une constitution différente du dispositif ravitailleur, c'est-à-dire de l'ensemble comprenant plusieurs (typiquement cinq) tubes guide-barres de différents diamètres réunis en un agencement de forme extérieure cylindrique. C'est ainsi qu'on en est venu à une constitution de dispositif ravitailleur améliorée, qui correspond à la conception particulière proposée, et qui va être décrite maintenant en liaison avec les fig. 3 à 6.

Les fig. 3 et 4 représentent en coupe le dispositif par lequel l'ensemble de cinq conduits guide-barres est établi à l'intérieur d'un ensemble cylindrique, d'une façon adéquate pour constituer un ravitailleur. D'une façon générale, le corps cylindrique allongé 101, 101' constituant le ravitailleur est formé d'un profilé central 102, 102', autour duquel sont placés plusieurs (typiquement deux mais possiblement aussi plus de deux) profilés marginaux 103, 103' et 104, 104' (les signes munis de primes se rapportent à la fig. 3 et ceux qui n'en ont pas se rapportent à la fig. 4). A la périphérie du profilé central 102, 102' se trouvent creusées des gorges à profil formant une portion d'arc légèrement inférieure à un demi-cercle et dans la surface intérieure des profilés marginaux 103, 103' et 104, 104' se trouvent creusées des gorges longitudinales correspondantes dont le profil est un arc de cercle légèrement supérieur à 180° (la différence à 180° provient de la courbure extérieure du profilé central et de la courbure intérieure des profilés marginaux). Ces profilés peuvent être fabriqués en grandes séries, par extrusion, étirage, ou également moulage ou frittage s'il s'agit de matière synthétique et ils peuvent être obtenus avec une très grande précision et à peu de frais.

Avec la variante représentée à la fig. 3, on a prévu des profilés faits d'une matière suffisamment dure pour que la surface même des gorges longitudinales puisse constituer la paroi du conduit guide-barre. Dans ce cas, il n'est pas nécessaire de prévoir l'engagement de tubes métalliques dans les conduits formés par la réunion de deux encoches, l'une du profilé central et l'autre d'un profilé marginal, il conviendra par contre de maintenir ensemble les deux profilés marginaux, ce qui pourra se faire soit en engageant les trois profilés assemblés dans un tube extérieur 126' (représenté en pointillés à la fig. 3, du fait de son caractère facultatif), soit en utilisant d'autres moyens (non représentés) de fixation des profilés les uns aux autres (collage, vissage, soudage, assemblage à l'aide de brides extérieures, etc). Dans le cas de l'assemblage selon la fig. 3, il est naturellement possible aussi de prévoir des tubes de guidage métallique sous forme de chemise, respectivement 121', 122', 123', 124', et 125', dans les conduits de guidage 111', 112', 113', 114' et 115' (les tubes ou chemises 121' à 125', sont représentés en pointillés à la fig. 3, compte tenu de leur caractère facultatif). Dans le cas envisagé à la fig. 3, où il est prévu que les conduits 111'-115' formés par les surfaces mêmes des gorges longitudinales puissent constituer les conduits guide-barres eux-mêmes, il peut être préférable que la paroi de ces conduits comprennent le moins possible de lignes longitudinales de jonction entre deux profilés. C'est la raison pour laquelle, à la fig. 3, on a prévu que la jonction des deux profilés marginaux 103' et 104' se trouve établie en des endroits où aucune gorge longitudinale ne se présente, ce qui signifie que tous les conduits de guidage seront formés par l'assemblage d'une gorge du profilé central et d'une gorge d'un seul des deux profilés marginaux. Ainsi, chaque conduit formé par deux gorges correspondantes comprendra dans sa paroi seulement deux lignes de jonction longitudinales entre profilés. Cette condition avantageuse n'est toutefois pas une nécessité.

Dans le cas où l'on prévoit de toute façon de placer des tubes ou chemises à l'intérieur des conduits formés par plusieurs gorges longitudinales, cas qui se présentera tant que les profilés seront faits d'une matière qui ne présentera pas la dureté et la résistance nécessaire, et notamment si ces profilés sont faits de matière synthétique, il est indifférent que la jonction entre les deux profilés extérieurs soit faite à l'endroit d'un conduit tubulaire ou en un endroit où aucun conduit tubulaire n'existe. La variante dans laquelle cette jonction est faite à l'endroit où se présente un conduit tubulaire est illustré à la fig. 4. On voit que d'une façon générale, la disposition des conduits formés par les gorges de profilés est la même à la fig. 4 qu'à la fig. 3. Toutefois, à la fig. 4, les deux jonctions entre les profilés marginaux 103 et 104 sont faites à l'endroit des deux plus grands conduits, respectivement 114 et 115. Les profilés marginaux peuvent de ce fait avoir une forme légèrement moins compliquée, par contre, on voit que les plus grands conduits 114 et 115 ont l'un et l'autre une partie de leur paroi dans l'aire du profilé central 102, l'autre partie dans l'aire d'un profilé marginal 103 et la dernière partie dans l'aire de l'autre profilé marginal, 104. Ceci ne tire toutefois aucunement à conséquence puisque tous les conduits sont munis de chemises, respectivement 121, 122, 123, 124, 125, pour les conduits 111, 112, 113, 114, 115. A la fig. 4, on a également représenté le tube extérieur 126, étant entendu que l'on pourrait éventuellement se passer de celui-ci, la surface extérieure des profilés pouvant fournir l'appui voulu. Dans un tel cas, il serait envisageable d'avoir une surface extérieure non pas circulaire, mais polygonale, permettant plus aisément d'indexer le dispositif. Toutefois, dans la variante selon la fig. 4, on a prévu des profilés de matière synthétique, exigeant la présence des chemises ou tubes intérieures métalliques, et le tube extérieur a également été dessiné en traits pleins, malgré que sa présence est facultative. Si les profilés étaient assez durs, on pourrait du reste aussi se passer des chemises 121-125.

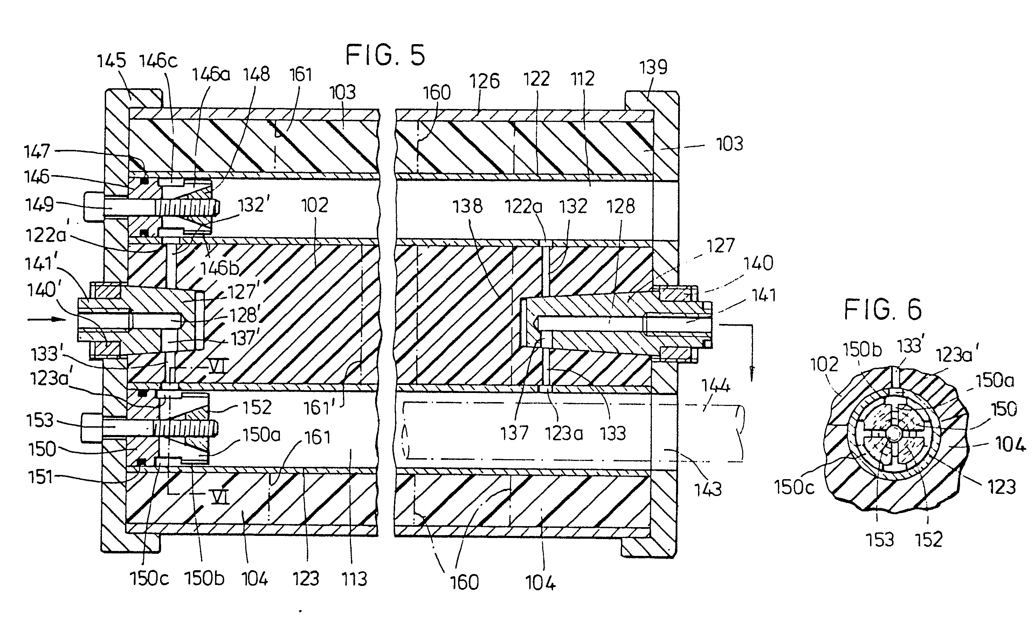

A la fig. 4, on a représenté également la présence, dans le profilé central 102, d'un distributeur ou collecteur rotatif 127 qui met en liaison un conduit central 128 sélectivement avec chacun des conduits guide-barre de différents diamètres 111 et 115. Pour cela, les différents tubes intérieurs ou chemises 121 à 125 sont tous pourvus d'un perçage (121a-125a) en face de chacun desquels le profilé central comprend un conduit radial respectivement 131-135. Il faut comprendre que le distributeur rotatif 127 est monté dans une portion voisine de l'extrémité du dispositif, dans une cavité centrale ménagée à cet effet. Ce distributeur rotatif comprend lui-même un conduit radial 137 qui, selon la position du distributeur rotatif 127 par rapport à l'ensemble du dispositif vient en correspondance avec l'un ou l'autre des cinq conduits radiaux 131 à 135. De cette façon, le conduit central axial 128 peut être mis sélectivement en liaison avec chacun des conduits guide-barres 111 à 125. La fig. 5 illustre du reste d'une façon plus précise l'agencement de ce distributeur central.

On note que la fig. 5 est une vue en coupe selon la ligne V-V tracée sur les fig. 3, 4 et 7.

Sur cette figure 5, on voit les deux chemises de guidage de barre (tubes intérieurs) 122 et 123. Ceux-ci sont maintenus entre les masses des trois profilés 103, 102 et 104, et le dessin, très raccourci, montre bien comment se présente la construction du dispositif. On note qu'en réalité, la longueur du dispositif est d'approximativement 5 m, tandis que son diamètre se situe entre 10 et 40 cm. Aux deux extrémités du dispositif, fixées de façon adéquate au tube extérieur manteau 126, se trouvent deux joues d'extrémité 139 et 145, de forme légèrement différente. En 144, on a montré la présence d'une barre de matériau à usiner dans le tube 123 situé le plus bas.

On voit que le distributeur central 127 a une forme légèrement conique, étant engagé dans une cavité également conique 138, ménagée dans l'extrémité avant du dispositif. Le distributeur 127 est donc en fait un collecteur, son rôle étant de transmettre la pression d'huile régnant à l'avant du tube guide-barre utilisé pour actionner le moment venu un capteur analogue au capteur 21 de la fig. 1. L'étanchéité entre la masse du profilé central 102 et le distributeur collecteur 127 est assurée par la conicité de ce dernier et du logement 138 où il est engagé. Le conduit axial central 128 du distributeur 127 est muni, vers l'extérieur, d'un pas de vis 141 pour la connexion d'un tube de conduction de pression d'huile. Une bague de serrage 140 est vissée dans un pas de vis intérieur d'une ouverture de la joue avant 139, cette bague 140 permet d'ajuster le serrage de la pièce conique constituant le distributeur 127 dans la cavité 138. On voit que le conduit radial 137 du distributeur 127, en liaison avec le conduit axial 128, est en alignement avec le conduit radial 133 ménagé dans le profilé central, le tube 123 présentant à cet endroit un perçage 123a, de façon que la conduction d'huile est établie depuis l'intérieur du tube 123, par les conduits 133 et 137, jusque dans le conduit central 128. Une fois le collecteur distributeur 127 mis dans la position voulue, la douille filetée 140 permet, si nécessaire, de bloquer son positionnement pour éviter tout risque de déplacement intempestif, en même temps que pour assurer l'étanchéité à l'aide des surfaces coniques en présence. Du fait du léger déplacement axial possible de la pièce rotative 127, le conduit radial 137 de celle-ci sera avantageusement quelque peu plus large que le conduit radial 133 ménagé dans le profilé central. On voit que par ailleurs le conduit radial 132, en liaison avec l'intérieur du tube guide-barre 122 par l'intermédiaire du perçage 122a ménagé dans celui-ci, atteint la surface périphérique de la pièce rotative 127, mais se trouve bouché à cet endroit-là, de sorte qu'aucune connexion n'existe entre le conduit central 128 et le conduit guide-barre 112 délimité par le tube guide-barre 122. La pièce rotative conique 127 bouche de façon étanche les quatre conduits radiaux non sélectionnés, 131, 132, 134 et 135 (voir fig. 4).

Du côté avant, la joue 139 présente, outre le perçage fileté central nécessaire à l'agencement de distribution central, cinq perçages qui sont en alignement avec les tubes guide-barre, deux de ceux-ci, 142 et 143, étant visibles à la fig. 5.

A l'arrière, le dispositif comprend un agencement distributeur rotatif analogue à celui qui vient d'être considéré mais servant à l'entrée de l'huile et à sa distribution dans l'un, sélectionné, des tubes guide-barre. Les signes de référence qui désignent les éléments de l'agencement de distribution rotatif arrière sont les mêmes que ceux qui désignent les éléments homologues de l'agencement de distribution avant, les organes de l'agencement arrière étant toutefois munis de '. Le fonctionnement et la constitution sont identiques, il n'est pas nécessaire d'y revenir ici. On note toutefois que l'agencement rotatif avant est avantageusement plus profond que l'agencement rotatif arrière, étant donné que les conduits radiaux de captage de pression doivent déboucher, vers l'avant, à une distance de l'extrémité du tube plus grande que la distance de l'extrémité arrière du tube à laquelle doivent déboucher les conduits radiaux homologues de l'agencement arrière. Par ailleurs, l'agencement arrière, d'amenée d'huile comprendra avantageusement des conduits plus larges que l'agencement avant qui ne doit transmettre qu'une valeur de pression d'huile.

Par ailleurs, du côté arrière, les conduits guide-barres doivent être bouchés, puisqu'ils reçoivent leur huile latéralement. On a prévu à cet effet, dans chaque conduit guide-barre, un bouchon, 146 pour le conduit guide-barre 112 et 150 pour le conduit guide-barre 113. Une coupe à travers le bouchon 150 est représenté à la fig. 6. On comprend que les deux bouchons 146 et 150, comprennent une partie arrière massive, entourée d'un joint d'étanchéité, respectivement 147 et 151. Ensuite, ces bouchons comprennent une gorge circulaire 146c, 150c, prolongée par des évidements longitudinaux 146b, 150b. Au droit de ces prolongements longitudinaux la pièce bouchon est fendue de quatre fentes longitudinales radiales 146a et 150a, de façon que sa partie avant est séparée en quatre secteurs aptes à s'écarter l'un de l'autre. La pièce-bouchon comprend un perçage axial à travers lequel est engagé une vis, respectivement 149 et 153, cette vis étant vissée de l'autre côté dans un écrou conique, respectivement 148 et 152, qui s'engage dans un évidement conique ménagé au droit des quatre secteurs susceptibles de s'écarter l'un de l'autre de la pièce bouchon 146 ou 150. On comprend aisément qu'en vissant la vis 149 ou 153 dans l'écrou conique 148 ou 152, on écarte ces parties qui viennent s'appuyer contre la paroi intérieure du tube et fixent fermement la pièce bouchon dans le tube, tout en laissant un passage d'huile entre la gorge circulaire 146c, 150c, et le conduit guide-barre 112, 113, par l'intermédiaire des évidements axiaux 146b, 150b des pièces bouchon 146 et 150. Cette construction est facile à comprendre en considérant les fig. 5 et 6. Les joints d'étanchéité, respectivement 147 et 151, assurent l'étanchéité entre la paroi du tube et la pièce-bouchon, le cas échéant, un joint d'étanchéité non représenté sera encore placé entre la pièce-bouchon 146, 150 et la partie cylindrique de la vis, 149, 153.

Il est évident que, pour réaliser le distributeur ou collecteur rotatif, d'autres constructions seraient possibles, notamment une construction comprenant des pièces rotatives cylindriques et non pas légèrement coniques, avec des joints d'étanchéité là où cela est rendu nécessaire.

On remarque encore que, puisque celui des tubes guide-barre qui est en fonction est toujours celui qui est au bas du dispositif, le distributeur rotatif ne tourne pas effectivement par rapport à l'environnement, mais c'est tout le dispositif qui tourne autour du distributeur rotatif qui garde son orientation. En pratique toutefois, on considère la rotation relative du distributeur rotatif et de l'ensemble du dispositif, de toute façon, le distributeur rotatif, fixé, tournera solidairement avec l'agencement cylindrique au cours de son indexation, puis le distributeur rotatif sera remis en position correcte en tournant, sous commande manuelle, à l'intérieur du dispositif cylindrique.

On note encore que la fabrication du dispositif représenté est simple, il suffit de disposer de profilés que l'on peut obtenir en grande quantité, en une exécution très précise, et à bon marché, ces profilés étant découpés en tronçons ayant la longueur voulue et étant assemblés de façon que leurs gorges longitudinales viennent adéquatement en correspondance. Pour tenir les trois profilés ensemble, le plus simple est de les enfiler dans un tube extérieur, des chemises étant glissées alors longitudinalement dans les conduits y relatifs. On pourrait songer à introduire les tubes latéralement, et cela pourrait se faire sans difficulté dans les gorges longitudinales du profilé central, par contre, cela ne serait pas possible sans autres mesures particulières dans les gorges longitudinales des profilés marginaux, puisque ces gorges ont un profil en arc de cercle dépassant 180°. Toutefois, avec le mode d'assemblage représenté à la fig. 4, les deux plus gros tubes guide-barre, 124 et 125, sont tenus entre trois parties de profilés et pourraient sans difficulté être mis en place latéralement. Il suffirait d'un aménagement peu important des arêtes qui se présentent des deux côtés des gorges longitudinales des profilés marginaux, aux endroits où se forment les conduits 111, 112 et 113, pour arriver aisément à une possibilité de montage dans laquelle les tubes 121 à 123 seraient introduits latéralement dans les gorges. La légère échancrure existant à l'endroit de ces arêtes créerait un vide de très petite dimension dans le dispositif, qui ne porterait aucunement à conséquence. Avec la forme d'exécution de la fig. 4, le montage consisterait à mettre en place tout d'abord les deux tubes 121 et 123 dans le profilé marginal 104, puis à lier les deux tubes les plus gros 124 et 125 au profilé central, dans les gorges y relatives de celui-ci, de mettre ensuite le profilé central muni des tubes 124 et 125 contre le profilé marginal 104 muni des tubes 121 et 123, de disposer ensuite le tube 122 dans l'encoche du profilé central et de mettre finalement en place le profilé marginal 103. Une étude géométrique attentive de la fig. 4 montre que cela serait possible moyennant seulement de très petites échancrures à l'endroit des lèvres des gorges ayant un profil arqué dépassant 180° dans les profilés marginaux, en forme générale de coquilles.

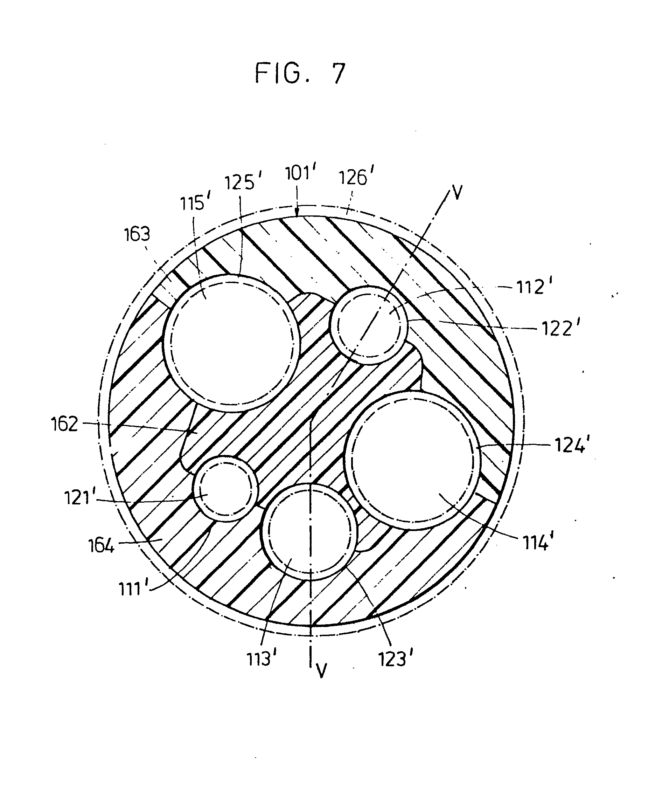

Concernant la possibilité de montage qui vient d'être discutée, il est du reste une structure de profilés quelque peu différente qui permettrait de résoudre avantageusement le problème de l'engagement des tubes. Cette solution représentée à la fig. 7 qui résulte une modification de la fig. 3. La disposition générale des profilés est la même, mais le profilé central 102' est remplacé par un profilé différent 162, le profilé marginal 103', est remplacé par un profilé d'autre forme 163, et le profilé marginal 104' est remplacé par un profilé différent 164'. Par ailleurs, les endroits de jonction entre les deux profilés marginaux 163 et 164 ont été établis au droit des tubes les plus gros 124' et 125', semblablement à ce qui était montré à la fig. 4.

Dans cette construction de la fig. 7, aucune gorge de profilé n'a son profil en arc de cercle établi sur plus de 180°. Les tubes les plus gros 124' et 125' ont trois portions de profilé toutes nettement inférieures à 180°, et les tubes les plus petits, 121', 122', 123', ont deux portions qui sont juste de 180°. Il est à remarquer que la portion de surface de profilé dans laquelle s'ouvrent les encoches destinées aux tubes 121' et 123' doit être une droite passant par les deux centres des conduits tubulaires respectifs. La portion de surface dans laquelle sont ménagées les encoches pour le tube 122' doit également être une droite, parallèle à celle que l'on vient de mentionner, et les lignes de jonction entre les deux profilés marginaux 163 et 164 ne doivent pas forcément être également parallèles à ces droites, mais elles doivent aboutir aux conduits tubulaires à l'endroit où aboutit une droite ayant cette orientation là et passant par le centre du conduit tubulaire respectif. Moyennant ces conditions, non seulement les cinq tubes peuvent être mis en place transversalement, c'est-à-dire qu'ils n'ont pas besoin d'être enfilés par le bout, mais en plus on ne rencontre pas de handicap pour la jonction des différents profilés. Les tubes de plus grands diamètres, 125' et 124' doivent d'abord être liés au profilé central 162, puis on voit que les deux autres profilés, 163 et 164, peuvent être mis en place à la manière du couvercle d'une boîte, en aucun endroit cette mise en place ne sera gênée par une interférence avec un tube. Les trois plus petits tubes 121', 122' et 123' peuvent à volonté être placés d'abord dans la gorge longitudinale du profil central ou dans la gorge longitudinale du profilé marginal, le montage se fait de la même manière.

On voit donc qu'il peut être avantageux, pour la construction des profilés, de se départir d'un dessin basé sur les arcs de cercle. Pour la fabrication des profilés, qui doit de toute façon intervenir d'une manière particulière, cette modification de dessin n'implique pas de complications particulières.

Il serait possible également en variante de prévoir que la surface extérieure ne soit pas cylindrique, toutefois, pour des raisons de commodité d'utilisation, un dispositif de ce type ayant une surface extérieure cylindrique semble être préférable. Un dessin en polygone régulier ou irrégulier n'est toutefois pas exclu, l'exactitude de positionnement devrait alors être déterminée par rapport aux plans des côtés du polygone et non plus par rapport à un centre.

Il faut noter encore différentes variantes d'exécution qui pourraient le cas échéant s'avérer avantageuses. C'est ainsi qu'on pourrait par exemple prévoir plus de deux profilés marginaux, on pourrait au contraire n'en prévoir qu'un seul qui serait de forme tubulaire ou annulaire. Dans un profilé marginal en une pièce bien sûr les tubes ou chemises, s'il en existe, de même que le ou les tronçons de profilé central, doivent être enfilés depuis le bout.

L'enfilement des différents éléments depuis le bout des tubes, qui demande une grande place de montage, peut être amélioré de ce point de vue en prévoyant que tout ou partie des profilés sont en plusieurs tronçons. Ceci est montré par des lignes en traits pointillés 160, 161, 161' à la fig. 5. Les lignes 160 montrent que les tronçons totaux de profilés pourraient être divisés en plusieurs petits tronçons, ceux-ci pouvant par ailleurs être jointifs ou au contraire laisser subsister entre eux des espaces axiaux. Dans un cas, les lignes en traits pointillés 160 de la fig. 5 représentent des jonctions entre deux tronçons partiels successifs, dans l'autre cas ces lignes représentent des limites de tronçon, entre lesquelles se situerait un espace vide. Egalement à la fig. 5, les lignes en traits pointillés 161 et 161' montrent une façon qui pourrait être avantageuse de disposer des tronçons relativement courts de profilé fournissant ensemble la longueur totale. Cette façon consisterait à avoir des jonctions entre deux tronçons successifs en des positions longitudinales différentes pour le profilé central 102 et pour les profilés marginaux 103 et 104. Dans ce cas, les tronçons partiels formant la longueur totale des profilés devraient bien sûr être jointifs, le fait que les lignes de coupure d'un tronçon partiel à l'autre ne seraient toutes aux mêmes endroits améliorait la rigidité du dispositif, un tronçon partiel central étant en engagement avec deux tronçons partiels marginaux, l'un de ceux-ci étant à nouveau en engagement avec deux tronçons partiels de profilé central, etc.

Il faut noter encore que la présence de chemises ou tubes dans les conduits tubulaires n'a pas seulement pour effet de renforcer la rigidité du matériel et de renforcer la résistance à l'usure dans le cas où les profilés seraient faits de matière plastique et ces tubes intérieurs ont également pour but de permettre un ajustage exact du diamètre de tube guide-barre désiré. Selon le cas, on peut mettre en place un tube ou chemise d'un diamètre plus ou moins grand, avec le même diamètre extérieur. Il serait même possible de rendre ces tubes interchangeables chez l'utilisateur, avec un type de construction du genre « meccano »®. Les différents diamètres intérieurs de tube peuvent naturellement aussi être déterminés à la fabrication, selon les vœux du client à la commande.

On note encore que le tube extérieur ou manteau peut devenir tout à fait superflu dans le cas où l'on n'aurait qu'un profilé marginal, de forme annulaire. C'est une question purement technologique de savoir s'il est avantageux ou non de mettre un tube extérieur dans ce cas, par contre, le tube extérieur est utile dans le cas où l'on a au moins deux profilés marginaux. Ce tube extérieur pourrait toutefois être remplacé par des bagues, présentes de loin en loin seulement, ou encore par d'autres moyens de fixation, par exemple à vis et boulons, entre les deux profilés marginaux. Enfin, que l'on ait ou non un tube extérieur pour tenir la structure, il pourrait être avantageux de prévoir, à la circonférence du dispositif, un revêtement d'isolation phonique, soit sous forme d'un tube de matière synthétique tendre soit sous forme d'un enrobage, d'un entourage, etc, selon les possibilités existantes de la technique d'isolation phonique.

De ce qui vient d'être décrit, il ressort avec évidence que la construction proposée permet d'atteindre des performances fort intéressantes et qu'elle atteint notamment les performances de diminution de coût et de complication et d'augmentation de précision dont l'obtention fait partie du but de l'invention.

**Revendications**

1. Dispositif ravitailleur pour tour automatique, présentant une pluralité d'espaces tubulaires guide-barres (111-115) de différents diamètres, comprenant un corps allongé en forme de cylindre (101) dont l'axe constitue l'axe principal du dispositif, ladite pluralité d'espaces tubulaires guide-barres de différents diamètres, étant ménagés dans le corps allongé en forme de cylindre, tous ces espaces tubulaires ayant leur axe parallèle audit axe principal, tous à une distance égale de celui-ci, caractérisé en ce qu'il est formé d'au moins un tronçon longitudinal de profilé central (102) et d'au moins un tronçon d'une pluralité de profilés marginaux (103, 104) en forme de coquille jointifs entre eux et rassemblés autour du tronçon de profilé central, la périphérie du profilé central étant munie de gorges longitudinales à profils en portions d'arc de cercle établissant des portions de parois cylindriques concaves, et la surface intérieure des profilés marginaux étant munie de gorges longitudinales avec une configuration qui établit des portions de parois cylindriques concaves correspondant respectivement à celles des gorges du profilé central et coopérant avec elles pour délimiter des espaces cylindriques longitudinaux.

2. Dispositif selon la revendication 1, caractérisé en ce qu'il comprend deux profilés marginaux (103', 104') qui sont jointifs en des endroits où ne se présente pas de gorge longitudinale.

3. Dispositif selon la revendication 1, caractérisé en ce que les profilés marginaux (163, 164, Fig. 7) sont au nombre de deux, les profils des trois profilés (162, 163, 164) étant tels qu'aucune des portions de parois cylindriques concaves ne dépasse 180°, les deux plus gros espaces cylindriques (114, 115) longitudinaux ayant leur paroi établie en partie dans chacun des trois profilés.

4. Dispositif selon la revendication 1, caractérisé en ce que les espaces cylindriques longitudinaux sont munis de chemises cylindriques (121'-125', Fig. 7) dont le diamètre intérieur est sélectionné pour constituer le diamètre de l'espace tubulaire guide-barre désiré.

5. Dispositif selon la revendication 4, caractérisé en ce que la configuration, en section droite, des profilés est établie de façon que les chemises soient transversalement amovibles à l'égard de chaque profilé pris isolément et les profilés marginaux soient transversalement amovibles à l'égard de l'ensemble formé par le profilé central et la totalité des chemises.

6. Dispositif selon l'une des revendications 1 à 5, caractérisé en ce que les profilés central et marginaux sont faits de matière synthétique et en ce que tous les espaces cylindriques longitudinaux sont munis de chemises tubulaires (121-125).

7. Dispositif selon l'une des revendications 1 à 6, caractérisé en ce que le corps allongé en forme de cylindre, formé d'une pluralité de profilés, est entouré d'un tube extérieur (126) qui maintient les profilés ensemble.

8. Dispositif selon l'une des revendications 1 à 7, caractérisé en ce qu'il comprend un seul tronçon de chaque profilé utilisé.

9. Dispositif selon l'une des revendications 1 à 7, caractérisé en ce qu'il comprend plusieurs tronçons jointifs d'au moins certains des profilés utilisés.

10. Dispositif selon la revendication 9, caractérisé en ce que les positions longitudinales de jonction entre tronçons du même profilé diffèrent d'un profilé à un autre.

11. Dispositif selon l'une des revendications 4 à 6, caractérisé en ce qu'il comprend plusieurs tronçons non jointifs de chaque profilé utilisé.

12. Dispositif selon l'une des revendications 1 à 11, caractérisé en ce que le tronçon de profilé central comprend, dans au moins une de ses faces d'extrémité, un distributeur ou collecteur central rotatif apte à faire communiquer un conduit sortant d'une façon centrale de la face d'extrémité du tronçon de profilé central, sélectivement avec l'un des espaces tubulaires guide-barres de différents diamètres.

13. Dispositif selon la revendication 12, caractérisé en ce que le distributeur ou collecteur rotatif central comprend une pièce circulaire montée rotativement dans un logement circulaire ménagé dans la face d'extrémité du tronçon de profilé central et dans lequel débouchent des conduits radiaux menant aux différents espaces tubulaires guide-barres, la pièce rotative comprenant un conduit radial en liaison avec son conduit axial, venant sélectivement en correspondance avec un des conduits radiaux menant aux espaces tubulaires guide-barres.

14. Dispositif selon l'une quelconque des revendications 1 à 13, caractérisé en ce que la surface cylindrique extérieure du corps allongé en forme de cylindre est recouverte d'un tube ou de revêtement fait d'une matière assurant une isolation phonique.

**Claims**

1. Feed device for automatic lathe, having a plurality of tubular bar-guiding spaces (111-115) of different diameters, comprising an elongated cylinder-shaped body (101), the axis of which constitutes the main axis of the device, said plurality of tubular bar-guiding spaces of different diameters being contrived in the elongated cylinder shaped body, all these tubular spaces having their axis parallel to the said main axis, all at an equal distance from the latter, characterized in that it is formed of at least one longitudinal length of central section-bar (102) and of at least one length of a plurality of shell-shaped marginal section-bars (103, 104) placed edge to edge with each other and assembled about the length of central section-bar, the periphery of the central section-bar being provided with longitudinal grooves having cross-sections as portions of an arc of a circle determin ng portions of concave cylindrical walls, and the inside surface of the marginal section-bars being provided with longitudinal grooves having a configuration which determines portions of concave cylindrical walls corresponding respectively to those of the grooves of the central section-bar and co-operating with them to delimit longitudinal cylindrical spaces.

2. Device according to claim 1, characterized in that it comprises two marginal section-bars (103', 104') which are placed edge to edge at places where no longitudinal groove occurs.

3. Device according to claim 1, characterized in that the marginal section-bars (163, 164, Fig. 7) are two in number, the cross-sections of the three section-bars (162, 163, 164) being such that none of the portions of concave cylindrical walls exceeds 180°, the two biggest longitudinal cylindrical spaces (114, 115) having their wall determined in part in each of the three section-bars.

4. Device according to claim 1, characterized in that the longitudinal cylindrical spaces are provided with cylindrical sleeves (121'-125', Fig. 7), the inside diameter of which is selected to constitute the diameter of the desired tubular bar-guiding space.

5. Device according to claim 4, characterized in that the configuration, in cross-section, of the section-bars is established in such a way that the sleeves are transversely removable with respect to each section-bar taken alone, and the marginal section-bars are transversely removable with respect to the whole formed by the central section-bar and the totality of the sleeves.

6. Device according to one of the claims 1 to 5, characterized in that the central and marginal section-bars are made of synthetic material, and in that all the longitudinal cylindrical spaces are provided with tubular sleeves (121-125).

7. Device according to claims 1 to 6, characterized in that the elongated cylinder-shaped body, formed of a plurality of section-bars, is surrounded by an outer tube (126) which holds the section-bars together.

8. Device according to claims 1 to 7, characterized in that it comprises a single length of each section-bar used.

9. Device according to claims 1 to 7, characterized in that it comprises several lengths, placed edge to edge, of at least certain ones of the section-bars used.

10. Device according to claim 9, characterized in that the longitudinal positions of junction between lengths of the same section-bar differ from one section-bar to another.

11. Device according to one of the claims 4 to 6, characterized in that it comprises several lengths, not placed edge to edge, of each section-bar used.

12. Device according to claims 1 to 11, characterized in that the length of central section-bar comprises, in at least one of its end faces, a rotary central distributor or collector suitable for causing a conduit issuing centrally from the end face of the length of central section-bar to communicate selectively with one of the tubular bar-guiding spaces of different diameters.

13. Device according to claim 12, characterized in that the central rotary distributor or collector comprises a circular part rotatingly mounted in a circular seating contribed in the end face of the length of central section-bar and in which radial conduits leading to the different tubular bar-guiding spaces open out, the rotary part comprising a radial conduit in communication with its axial conduit, coming selectively in connection with one of the radial conduits leading to the tubular bar-guiding spaces.

14. Device according to one of the claims 1 to 13, characterized in that the outer cylindrical surface of the elongated cylinder-shaped body is covered with a tube or with coating made of a material ensuring sound-insulation.

**Ansprüche**

1. Zuführeinrichtung für automatischen Drehbank, die eine Mehrzahl von rohrförmigen Stangenführungsräumen (111-115) aufweist, die verschieden grosse Durchmesser haben, mit einem länglichen Körper mit der Gestalt eines Zylinders (101), dessen Achse die Hauptachse der Einrichtung bildet, wobei die besagte Mehrzahl von rohrförmigen Stangenführungsräumen verschieden grossen Durchmesser in diesem länglichen Körper in Gestalt eines Zylinders untergebracht ist, wobei diese rohrförmigen Räume ihre Achse parallel zur besagten Hauptachse haben und sich alle von derselben in gleichem Abstand befinden, dadurch gekennzeichnet, dass sie aus mindestens einem Längsabschnitt eines Zentralprofiles (102) und aus mindestens einem Abschnitt einer Mehrzahl von schalenförmigen Randprofilen (103, 104) besteht, die sich einander anschliessen und um den Zentralprofilabschnitt vereinigt sind, wobei die Peripherie des Zentralabschnittes mit Längsnuten versehen ist, die ein kreisbogenförmiges Profil haben und Teile von konkaven zylindrischen Wandungen bilden, und dass ferner die Innenoberfläche der Randprofile mit Längsnuten versehen ist mit einer Gestalt, welche Teile von konkaven zylindrischen Wandungen bestimmt, welche je denjenigen der Nuten des Zentralprofils entsprechen und welche mit ihnen zusammenarbeiten zur Abgrenzung zylindrischer Längsräume.

2. Einrichtung nach Anspruch 1, dadurch gekennzeichnet, dass sie zwei Randprofile (103', 104') aufweist, die aneinander anschliessen an Stellen, an denen keine längsnut vorliegt.

3. Einrichtung nach Anspruch 1, dadurch gekennzeichnet, dass zwei der besagten Randprofile (163, 164, Fig. 7), vorliegen, wobei die Umrissform der drei Profile (162, 163, 164) so gewählt sind, dass keiner der Teile von konkaven zylindrischen Wandungen 180° übersteigt, wobei die beiden weitesten längsverlaufenden zylindrischen Räume (114, 115) eine Wandung haben, die auf die drei Profile verteilt ist.

4. Einrichtung nach Anspruch 1, dadurch gekennzeichnet, dass die längsverlaufenden zylindrischen Räume mit Zylinderbuchsen (121'-125', Fig. 7) ausgerüstet sind, deren Innendurchmesser ausgewählt ist zur Bildung des Durchmessers des gewählten rohrförmigen Stangenführungsraumes.

5. Einrichtung nach Anspruch 4, dadurch gekennzeichnet, dass im Querschnitt die Profile eine derartige Gestalt haben, dass die Buchsen querweise wegnehmbar sind, hinsichtlich jedes für sich genommenen Profiles und dass die Randprofile querweise wegnehmbar sind hinsichtlich der Ganzheit, die gebildet ist aus dem Zentralprofil und sämtlichen Buchsen.

6. Einrichtung nach einem der Ansprüche 1 bis 5, dadurch gekennzeichnet, dass sowohl das Zentralprofil wie auch die Randprofile aus Kunststoff bestehen und dass die Längszylinderräume mit rohrförmigen Buchsen (121-125) ausgerüstet sind.

7. Einrichtung nach einem der Ansprüche 1 bis 6, dadurch gekennzeichnet, dass der zylinderförmige Längskörper, der aus einer Mehrzahl von Profilen gebildet ist, von einem Aussenrohr (126) umgeben ist, das die Profile zusammenhält.

8. Einrichtung nach einem der Ansprüche 1 bis 7, dadurch gekennzeichnet, dass er einen einzigen Abschnitt eines jeden gewählten Profiles aufweist.

9. Einrichtung nach einem der Ansprüche 1 bis 7, dadurch gekennzeichnet, dass er mehrere aneinanderschliessende Abschnitte von mindestens einigen der benützten Profile aufweist.

10. Einrichtung nach Anspruch 9, dadurch gekennzeichnet, dass die Längslagen des Zusammenschlusses zwischen Abschnitten ein und desselben Profils verschieden sind von einem Profil zum andern.

11. Einrichtung nach einem der Ansprüche 4 bis 6, dadurch gekennzeichnet, dass sie mehrere nicht aneinander anschliessende Abschnitte jedes gewählten Profils aufweist.

12. Einrichtung nach einem der Ansprüche 1 bis 11, dadurch gekennzeichnet, dass der Zentralprofilabschnitt in einer seiner Stirnflächen einen zentralen drehbaren Verteiler oder Sammler aufweist, der dazu befähigt ist, eine Leitung, die in zentraler Weise aus der Stirnfläche des Zentralprofilabschnittes austritt, wahlweise mit dem einen oder anderen der rohrförmigen Stangenführungsräume verschieden grossen Durchmessers in Verbindung zu setzen.

13. Einrichtung nach Anspruch 12, dadurch gekennzeichnet, dass der zentrale drehbare Verteiler oder Sammler ein kreisförmiges Stück aufweist, das drehbar in einer kreisförmigen Ausnehmung in der Stirnfläche des Zentralprofilabschnittes eingesetzt ist, in welcher radiale Leitungen ausmünden, die zu den verschiedenen rohrförmigen Stangenführungsräumen führen, wobei das drehbare Stück eine radiale Leitung aufweist, die mit seiner Axialleitung in Verbindung steht und die selektiv mit einer der Radialleitungen in Ueberdeckung gelangt, die zu den rohrförmigen Stangenführungsräumen führt.

14. Einrichtung nach einem der Ansprüche 1 bis 13, dadurch gekennzeichnet, dass die zylindrische Aussenfläche des zylinderförmigen Längskörpers mit einem Rohr oder mit einer Auskleidung überdeckt ist, der bzw. die aus einem Stoff besteht, der eine Schallisolation gewährleistet.

FIG. 1

FIG. 2

0 070 073

FIG. 3

FIG. 4

FIG. 5

FIG. 6

FIG. 7